# EUROPEAN PATENT APPLICATION

(11) **EP 4 376 271 A1**
(43) Date of publication of application: **29.05.2024**
(21) Application number: 23211695.4
(22) Date of filing: 23.11.2023
(51) Int. Cl.: H02K 7/00, H02K 11/33, H02K 5/10, H02K 15/14, G01M 3/02, G01M 3/26, H02K 16/00, B60K 1/02

(54) **ELECTRIC MACHINE FOR MOTOR VEHICLES, METHOD FOR TESTING THE SEALING OF GASKETS PROVIDED IN SUCH AN ELECTRIC MACHINE, AND MOTOR VEHICLE AXLE PROVIDED WITH SUCH ELECTRIC MACHINE**

(30) Priority: 25.11.2022 IT 202200024363
(71) Applicant: FERRARI S.p.A., 41100 Modena (IT)
(72) Inventor: FERRARA, Davide, 41100 MODENA (IT); FAVERZANI, Paolo, 41100 Modena (IT); POGGIO, Luca, 41100 Modena (IT)
(74) Representative: Studio Torta S.p.A.

(57) **Abstract**

An electric machine (2) for motor vehicles has a casing (8) defining at least one chamber accommodating electric/electronic components (17, 30); the rotor of the electric machine (2) has a shaft (20) provided with a first and a second end portion (21, 26), axially opposite one another; the first end portion (21) is configured so as to define a coupling point, at an axial end of the electric machine (2), to transmit motion; at the axial opposite end, the electric machine (2) is closed by a lid (37) having an outer annular portion (38) coupled to the casing (8) through the interposition of at least one gasket (39, 35); the shaft (20) has a through hole (50) with an input mouth (51a) at the first end portion (21) and an output mouth (51b) communicating with the above-mentioned chamber (29a); in a testing method for testing the sealing of the gasket (39, 35), pressurised air is blown through this input mouth (51a) .

## Description

### CROSS-REFERENCE TO RELATED APPLICATIONS

This patent application claims priority from Italian patent application no. 102022000024363 filed on November 25, 2022, the entire disclosure of which is incorporated herein by reference.

### TECHNICAL FIELD

This invention relates to an electric machine for motor vehicles. In particular, this disclosure relates both to electric machines that only perform the function of a motor and electric machines that perform the functions of both motor and generator.

### BACKGROUND

Generally, electric machines undergo a test operation to check the gaskets at the end of the production cycle, i.e., to check that the space inside the electric machine is airtight and watertight in relation to humidity, rain water, and/or dust that could damage and/or cause wear to the inner components.

Generally, to perform this test, the inner space is pressurised by blowing air and then any changes in the internal pressure values as time passes are checked. This type of test is usually identified with the term "pressing."

Generally, to blow air, a relief valve is used: itis mounted at an axial end of the electric machine and, in normal operating conditions, has the function of compensating for changes in atmospheric pressure during use. In particular, during this compensation, the relief valve lets air (but not liquids) leak out between the inner space and the outside, so as to automatically adapt the inner pressure of the electric machine to the atmospheric one. At the same time, known relief valves may also be connected to a source of compressed air to pressurise the inside of the corresponding electric machine and, thus, perform the pressing test.

In some cases, the electric machines do not have a relief valve: the latter is installed on the electric machine only temporarily, only to perform the pressing test, before being removed, with a consequent expenditure of time and expenses.

There is a need to modify known electric machines and to perform the pressing test using different methods, to avoid the assembly of the above-mentioned relief valve, but leaving, in any case, the possibility of testing the sealing of the gaskets simply and effectively.

### SUMMARY

The purpose of this invention is, thus, to provide an electric machine for motor vehicles that simply and cost-effectively fulfils the needs mentioned above.

According to this invention, an electric machine is provided for motor vehicles, as defined in Claim 1. This invention, moreover, relates to a testing method for testing the sealing of gaskets provided with this electric machine, as defined in Claim 10, and to a motor vehicle axle, as defined in Claim 8.

### BRIEF DESCRIPTION OF THE DRAWINGS

To better understand this invention, a preferred embodiment is described below, by way of non-limiting example and with reference to the attached drawings, in which:
- Figure 1 is a schematic view in cross-section, and shows a motor vehicle axle that is provided with a preferred embodiment of the electric machine according to the precepts of this invention; and
- Figure 2 illustrates, on a larger scale, the electric machine in Figure 1.

### DESCRIPTION OF EMBODIMENTS

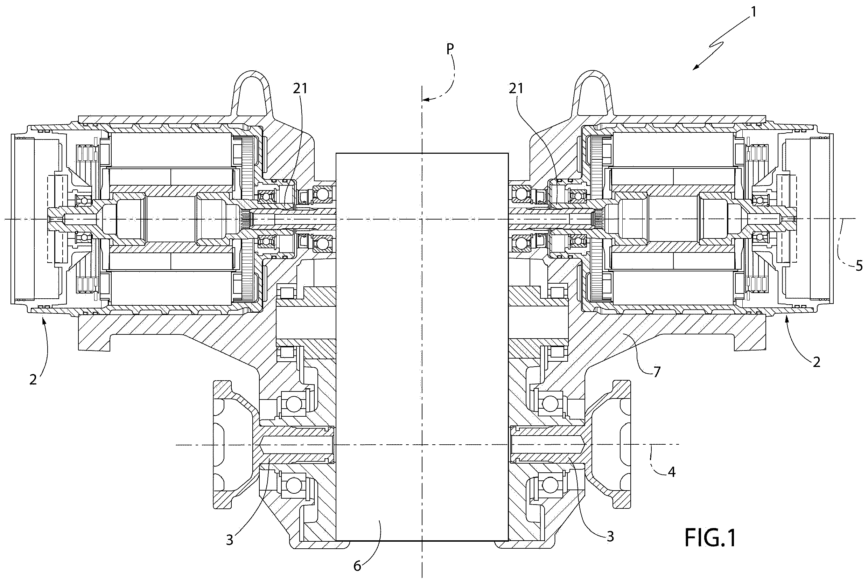

With reference to what is schematically and partially illustrated in Figure 1, the reference number 1 indicates, as a whole, a motor vehicle axle comprising two electric machines 2, for the traction of two wheels that are not illustrated. The axle 1 comprises two axle shafts 3 that drive these wheels and extend along an axis 4, while the electric machines 2 are coaxial to each other along an axis 5 that is parallel to and spaced apart from the axis 4.

Each axle shaft 3 is coupled to a corresponding electric machine 2 by means of a gear transmission 6, schematically illustrated and not described in detail, and rotates in relation to a fixed structure 7, which supports the electric machines 2 and the same transmission 6. In particular, the transmission 6 has separate and independent interlocking to respectively drive the two axle shafts 3.

The electric machines 2 are equal, and are symmetrical to each other in relation to a vertical midplane P of the motor vehicle. The following discussion will refer, therefore, only to one of these electric machines 2.

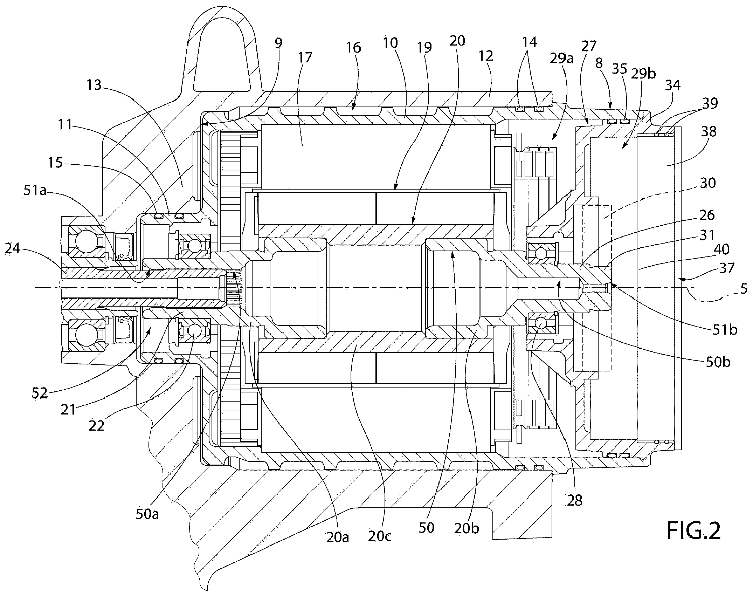

With reference to Figure 2, the electric machine 2 comprises a casing 8 that engages, in a fixed position, a seat 9 formed in the structure 7. In particular, the casing 8 comprises a housing portion 10 and an end collar 11, that axially projects in relation to the portion 10 and has a smaller diameter than the latter. The portion 10 and the collar 11 are coupled to corresponding portions 12 and 13 of the structure 7 by interposing gaskets 14 and 15 that ensure the sealing of a gap 16 between the outer surface of the casing 8 and the structure 7 to cool the electric machine 2 during use by means of a flow of coolant.

The electric machine 2 comprises a stator 17, arranged in a fixed position in the portion 10, and a rotor 19, comprising, in turn, a shaft 20 that extends along the axis 5.

At one of the two axial ends, the shaft 20 ends with a connection portion 21 which axially projects beyond the stator 17 and inside the collar 11, is supported by the same collar 11 by means of a rolling bearing 22, and is connected to the transmission 6 by means of a transmission element 24. Advantageously, the transmission element 24 is defined by a grooved shaft, while the connection portion 21 defines a sleeve having a grooved hole engaged by the transmission element 24. With reference to Figure 1, the electric machines 2 are mounted in positions such as to have the corresponding connection portions 21 axially facing each other, i.e., towards the vertical midplane P.

Returning to Figure 2, at the axial end opposite the connection portion 21, the shaft 20 ends with a shank 26 which is coupled to a support body 27 by means of a rolling bearing 28. The support body 27 is fixed in relation to the casing 8 and axially separates the inner volume of the casing 8 into two chambers 29a and 29b: the chamber 29a accommodates the stator 17 and the electrical connections for the three phases, while the chamber 29b accommodates an angular position transducer 30 (schematically illustrated in dashed lines) that is fitted on an end portion 31 of the shank 26. The transducer 30 is not essential for the purposes of this invention, since the motor could be a so-called "sensorless" motor.

The chambers 29a and 29b communicate with each other through the passages naturally present between the rolling bodies of the bearing 28.

In particular, the support body 27 comprises an outer annular portion 34 that is coupled to the portion 10 by means of one or more gaskets 35 that have the purpose of keeping the chamber 29a airtight and watertight in relation to the outside.

Axially, the chamber 29b is closed by a lid 37, schematically illustrated, comprising an outer annular portion 38 that is coupled to the outer annular portion 34 of the support body 27 by means of one or more gaskets 39 that have the purpose of keeping the chamber 29b airtight and watertight in relation to the outside.

The lid 37 comprises, in addition, a central portion 40, which is aligned along the axis 5 with the transducer 30 and with the shank 26, and is axially spaced apart from the latter.

According to this invention, the shaft 20 has a through hole 50, i.e., it extends, without obstacles, and preferably without branches, between an input mouth 51a and an output mouth 51b. The shaft 20 may consist of a single piece, or several separate pieces, coupled to each other, as in the example illustrated. Specifically, the connection portion 21 and the shank 26 define the ends of respective shaft 20a and 20b elements that are axially spaced apart and are connected to each other by means of an intermediate sleeve 20c. More specifically, the hole 50 has two opposite end sections, 50a and 50b, respectively defined by the connection portion 21 and the shank 26.

According to one aspect of this invention, the hole 50 may be easily used as a duct to blow air into the electric machine 2 during the pressing tests that must be performed to check the sealing of the gaskets 35 and 39, using the mouths 51a and 51b of the hole 50, at the sections 50a and 50b respectively. More specifically, during the pressing test, the input mouth 51a provided at the connection portion 21 is connected to a pressurised air source, in a way not illustrated, so as to blow air into the hole 50. At the same time, indicating the annular space between the free end of the connection portion 21 and the collar 11 with the reference number 52, this space 52 is plugged during the test, using known techniques not illustrated, to ensure the airtight and watertight sealing of the chamber 29a, i.e., to avoid air escaping outside through the bearing 22 during the test. At the same time, the gaskets 35 and 39 have the task of ensuring the airtight and watertight sealing at the opposite axial end of the electric machine 2.

The air blown into the hole 50 is, thus, channelled towards the output mouth 51b that, advantageously, is provided at the end portion 31 of the shank 26. From here, the pressurised air flows into the chamber 29b and, from the latter, in to the chamber 29a (through the bearing 28). In this way, therefore, all the space inside the portion 10 is pressurised. At this point, using suitable pressurised transducers not illustrated (connected, for example, with the pressurised air source), it is possible to test whether the inner pressure tends to stay constant or if it tends to reduce, as time passes. In the first case, the sealing of the gaskets 35 and 39 is verified, while, in the second case, the decrease in pressure is a clue that air is leaking outside, owing to plays or flaws in the gaskets 35 and/or 39, which compromise the insulation of the components accommodated in the portion 10, in relation to humidity and water that may be present outside.

From the above, the advantages entailed by the drilling of the shaft 20 in the electric machine 2 are clear to a skilled person in this sector. In particular, the drilling of the end of the shaft 20 at the shank 26 makes it possible to use the shaft 20 as a pipe to blow air into the chambers 29b and, as a result, 29a, during the pressing test.

This simple technique makes it possible to avoid the use of relief valves to blow pressurised air into the electric machine 2. In addition, this technique is particularly useful in the configuration of the axle 1 in Figure 1, where the connection portion 21 of each electric machine 2 is already, in itself, drilled to couple the transmission 6 by means of a splined coupling, so that the input mouth 51a of the hole 50 is used as an access point for the air and as a connection point for the transmission 6.

In addition, the drilling of the shaft 20 is extremely simple to do, being defined by axial holes.

From the above, it is clear how modifications may be made to the electric machine 2, to the corresponding axle 1, and/or to the testing method for testing the gaskets 35 and 39, as described above, or variations produced thereof, without, for this reason, departing from the protective scope as defined by the attached claims.

In particular, the shape and dimensions of the casing 8, of the support body 27, of the lid 37, and of the end portions of the shaft 20 (defined by the connection portions 21 and by the shank 26) could be different from what is shown in the particular example illustrated in the attached figures.

In addition, the lid 37 could be coupled by means of the gaskets 39 directly to the portion 10, without the interposition of the outer annular portion 34 of the support body 27; in this case, the gaskets 35 (and, possibly, the support body 27 too) could be left out.

In addition, the output mouth 51b of the hole 50 could be formed radially, instead of axially (as long as the output mouth 51b continues to communicate, directly or indirectly, with the chambers 29a and 29b).

In addition, during assembly of the axle 1, the space 52 could be used to mount a relief valve to compensate, in use, for any differences between the inner and outer pressure, without using this relief valve for the pressing test described above.

Finally, this invention is independent of the number of electric motors provided in the axle 1 and the arrangement of these electric motors; for this latter aspect, for example, the electric motors could be coaxial with the wheels.

## Claims

1. An electric machine (2) for motor vehicles, comprising:
- a casing (8) defining at least one chamber (29a) accommodating electric/electronic components (17,30);
- a rotor (19) comprising a shaft (20), which extends along an axis (5) and comprises a first and a second end portion (21,26) axially opposite one another; said first end portion (21) being configured so as to define a coupling point, at an axial end of the electric machine (2), to transmit motion;
- a lid (37) comprising a first outer annular portion (38) coupled to said casing (8) through the interposition of at least one first gasket (39), in a position such as to close said electric machine (2) and, hence, insulate said components (17, 30) relative to the outside, at an axial end opposite the one of said first end portion (21);
**characterized in that** said shaft (20) has a through hole (50) having an input mouth (51a) at said first end portion (21) and an output mouth (51b) communicating with said chamber (29a); said input mouth (51a) being designed to be connected to a pressurised air source, to blow air into said through hole (50) during a check to test the sealing, at least, of said first gasket (39).

2. The electric machine according to claim 1, wherein said hole (50) at least partly extends along the axis (5) of said shaft (20).

3. The electric machine according to claim 2, wherein said hole (50) completely extends along the axis of said shaft (20).

4. The electric machine according to any one of the preceding claims, wherein said lid (37) comprises a central portion (38) facing and axially spaced apart from said second end portion (26).

5. The electric machine according to any one of the preceding claims, wherein said second end portion (26) is supported by a bearing (28), and wherein the electric machine (2) comprises a support body (27), which couples said bearing (28) to said casing (8) and axially separates, from one another, said chamber (29a) and a further chamber (29b), communicating with each other; said output mouth (51b) directly leading into said further chamber (29b).

6. The electric machine according to claim 5, wherein said support body (27) comprises a second outer annular portion (34) coupled to said casing (8) through the interposition of at least one second gasket (35); said first outer annular portion (38) being coupled to said second outer annular portion (34) through said first gasket (39) .

7. The electric machine according to any one of the preceding claims, wherein said first end portion (21) defines a sleeve having an axial hole designed to be engaged by a transmission shaft (24) so as to transmit motion, at said input mouth (51a).

8. A motor vehicle axle (1) comprising:
- at least one electric machine (2) according to claim 7;
- two axle shafts (3);
- transmission means (6) which couple said first end portion (21) to at least one of said axle shafts (3).

9. The motor vehicle axle (1) according to claim 8, comprising two electric machines (2), each according to claim 7; wherein:
- the first end portions (21) of said electric machines (2) axially face one another;
- said axle shafts (3) are arranged along a further axis (4) parallel to, and spaced apart from, the axis (5) of said electric machines (2);
- said transmission means (6) respectively couple said first end portions (21) to said axle shafts (3).

10. A testing method to test the sealing of gaskets provided in an electric machine (2) according to any one of the claims from 1 to 7, the method comprising the steps of:
- pressurising said chamber (29b) by blowing air under pressure;
- controlling the pressure level in said chamber (29a) as time goes by;
**characterized in that** the air under pressure is blown through said input mouth (51a).
